# EUROPÄISCHE PATENTANMELDUNG

(11) **EP 4 436 096 A1**
(43) Veröffentlichungstag der Anmeldung: **25.09.2024**
(21) Anmeldenummer: 23162899.1
(22) Anmeldetag: 20.03.2023
(51) Int. Cl.: H04L 9/08, H04L 9/32

(54) **BEGLAUBIGUNG VON DATEN EINES AUTHENTISIERUNGS- UND SCHLÜSSELVEREINBARUNGSPROTOKOLL-ABLAUFS**

(71) Anmelder: Siemens Aktiengesellschaft, 80333 München (DE)
(72) Erfinder: Aschauer, Hans, 81829 München (DE); Che, Kai, 80636 München (DE); De Santis, Fabrizio, 80634 München (DE); Falk, Rainer, 85435 Erding (DE); Furch, Andreas, 85354 Freising (DE); Safieh, Malek, 81539 München (DE); Schneider, Daniel, 80796 München (DE); Vaira, Antonio, 81379 München (DE); Zeschg, Thomas, 81543 München (DE); Zwanzger, Johannes, 85579 Neubiberg (DE)
(74) Vertreter: Siemens Patent Attorneys

(57) **Zusammenfassung**

Die Erfindung betrifft eine Beglaubigungseinheit (2), aufweisend:
- eine Erfassungseinheit (21), ausgebildet einen Authentisierungs- und Schlüsselvereinbarungsprotokoll-Ablauf zu erfassen,
- eine Erstellungseinheit (22), ausgebildet Daten, welche dem Authentisierungs- und Schlüsselvereinbarungsprotokoll-Ablauf zugehörig sind, aus dem Authentisierungs- und Schlüsselvereinbarungsprotokoll-Ablauf unter Einbezug einer Bestätigungsrichtlinie (211) abzuleiten,
- eine Authentisierungseinheit (23), ausgebildet die Daten auf Integrität zu schützen, wodurch integritätsgeschützte Daten (232) gebildet werden, und
- eine Bereitstellungseinheit (24), ausgebildet die integritätsgeschützten Daten (232) bereitzustellen.

Außerdem betrifft die Erfindung ein Gerät (1) und ein Verfahren zum Bereitstellen integritätsgeschützter Daten (232).

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft eine Beglaubigungseinheit. Die Erfindung betrifft außerdem ein zugehöriges Gerät und ein zugehöriges Verfahren zum Bereitstellen integritätsgeschützter Daten.

### Beschreibung des Stands der Technik

Zur kryptographisch geschützten Kommunikation zwischen zwei Teilnehmern können Protokolle wie insbesondere TLS, DTLS, QUIC oder IPsec/IKEv2 verwendet werden. Dazu erfolgt zuerst eine Authentisierung und Schlüsselvereinbarung (AKA, authentication and key agreement), bei der sich die Teilnehmer authentisieren (mutual authentication) oder zumindest einseitig authentisieren (unilateral authentication). Weiterhin ist auch eine unauthentisierte Schlüsselvereinbarung möglich, auch wenn dies in der Praxis eher in Sonderfällen relevant ist. Bei der Authentisierung und Schlüsselvereinbarung wird symmetrisches Schlüsselmaterial (Sitzungsschlüssel) eingerichtet, das zum kryptographischen Schutz (einer Verschlüsselung, einem Integritätsschutz und/oder einer Authenticated Encryption) von übertragenen Nutzerdaten zwischen Teilnehmern verwendet wird.

Bei herkömmlichen kryptographischen Verfahren wie RSA oder Elliptischen Kurven wird zur Authentisierung üblicherweise eine digitale Signatur verwendet, mit der AKA-Protokollnachrichten oder darin enthaltene AKA-Parameter digital signiert werden. Bei üblichen Post-Quantum- (PQ-) kryptographischen Algorithmen (oder allgemein "next generation crypto algorithms") ist eine Signaturberechnung rechenaufwendig. Daher wurde eine auf KEM (Key Encapsulation Mechanism) basierende Authentisierung vorgeschlagen, z.B. durch KEMTLS. Bei beiden Varianten wird ein Teilnehmer jedoch nur einfach, d.h. mit einem einzelnen kryptographischen Verfahren und einem entsprechenden Authentisierungscredential (private Key und zugeordnetes digitales Zertifikat) für dieses Verfahren authentisiert.

Manche Empfehlungen zur Nutzung von Post-Quantum kryptographischen Algorithmen, z.B. vom Bundesamt für Sicherheit in der Informationstechnik (BSI) oder von der Agence nationale de la sécurité des systèmes d'information (ANSSI), fordern grundsätzlich hybride kryptographische Verfahren, bei denen ein PQ-Algorithmus zusammen mit einem herkömmlichen Algorithmus verwendet wird. Siehe BSI: Migration to Post Quantum Cryptography, Recommendations for action by the BSI, 31.05.2021, Abschnitt 3.5: "Therefore, the BSI does not recommend using post-quantum cryptography alone, but only "hybrid" if possible, i.e. in combination with classical algorithms. In a hybrid key exchange, for example, the two negotiated secrets must be combined by means of a suitable key derivation function to form a session key. In high-security applications, the BSI requires the use of hybrid solutions." Die Kombination soll sicher sein, soweit zumindest einer der verwendeten kryptographischen Algorithmen nicht gebrochen ist (z.B. durch einen Quantencomputer oder durch eine algorithmische Design-Schwäche oder durch ein Implementierungsproblem).

Einen Überblick über PQ-Kryptographie gibt BSI, Quantum-safe cryptography - fundamentals, current developments and recommendations, Okt. 2021. Darin ist in Abschnitt 3.1.1 "Key agreement" eine hybride Schlüsselvereinbarung beschrieben, in Abschnitt 3.1.2 "Hybrid signatures and adaptation of public key infrastructures" ist eine Mehrfachsignatur einer Nachricht beschrieben (message authentication).

Innerhalb eines Authentisierungs- und Schlüsselvereinbarungs-Protokollablaufs zwischen zwei Knoten erfolgen bei hybriden Schlüsselvereinbarungsprotokollen zwei kryptographisch unterschiedliche Schlüsselvereinbarungen, aus denen jeweils ein Sitzungsschlüssel resultiert, aus denen dann ein Gesamtsitzungsschlüssel zum Schutz von übertragenen Nutzerdaten gebildet wird.

Der Entwurf und die Umsetzung von hybriden Authentisierungsverfahren, bei denen zwei unterschiedliche kryptographische Authentisierungsalgorithmen kombiniert werden, ist jedoch aufwendig und kann nicht einfach breit für unterschiedliche Sicherheitsprotokolle und unterschiedliche kryptographische Algorithmen umgesetzt werden.

Die Aufgabe der Erfindung besteht darin, eine Lösung für einen verbesserten Authentizitätsschutz für eine Kommunikation zwischen Teilnehmern bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Beglaubigungseinheit, aufweisend:
- eine Erfassungseinheit, ausgebildet einen Authentisierungs- und Schlüsselvereinbarungsprotokoll-Ablauf zu erfassen,
- eine Erstellungseinheit, ausgebildet Daten, welche dem Authentisierungs- und Schlüsselvereinbarungsprotokoll-Ablauf zugehörig sind, aus dem Authentisierungs- und Schlüsselvereinbarungsprotokoll-Ablauf unter Einbezug einer Bestätigungsrichtlinie abzuleiten,
- eine Authentisierungseinheit, ausgebildet die Daten auf Integrität zu schützen, wodurch integritätsgeschützte Daten gebildet werden, und
- eine Bereitstellungseinheit, ausgebildet die integritätsgeschützten Daten bereitzustellen.

In anderen Worten ist die Beglaubigungseinheit ausgebildet, eine Beglaubigung von Daten, welche einem Authentisierungsund Schlüsselvereinbarungsprotokoll-Ablauf zugehörig sind, abzuleiten und in integritätsgeschützter, insbesondere signierter, Form bereitzustellen.

Die integritätsgeschützten Daten sind auch als beglaubigte Daten bezeichenbar.

Generell ist der Authentisierungs- und Schlüsselvereinbarungsprotokoll-Ablauf als eine Kommunikationssitzung, eine Kommunikationsverbindung und/oder eine Datenübertragung zu verstehen.

Durch eine Authentisierung und Schlüsselvereinbarung wird ein Sitzungsschlüssel erstellt. Die Authentisierung und Schlüsselvereinbarung ist im Englischen unter "authentication and key agreement" (AKA) bekannt. Der erstellte Sitzungsschlüssel ist zum Schutz von Daten, welche in einem Kommunikationsprotokollablauf, dem Authentisierungs- und Schlüsselvereinbarungsprotokoll-Ablauf, ausgetauscht werden, ausgebildet. Somit wird in dem Authentisierungs- und Schlüsselvereinbarungsprotokoll-Ablauf (AKA-Ablaufs) der zuvor erstellte Sitzungsschlüssel verwendet, um das ablaufende Kommunikationsprotokoll, insbesondere die im Ablauf ausgetauschten Nachrichten zu schützen. Die ausgetauschten Nachrichten sind eine Ausführungsform von Daten, welche dem Authentisierungs- und Schlüsselvereinbarungsprotokoll-Ablauf zugehörig sind.

Insbesondere dient die Authentisierung und Schlüsselvereinbarung in einer Ausführungsform zum Einrichten eines symmetrischen Sitzungsschlüssels zwischen zwei Teilnehmern (einem ersten und einem zweiten Teilnehmer). Der symmetrische Sitzungsschlüssel wird zum kryptographischen Schutz von Nutzerdaten verwendet, die zwischen den Teilnehmern übertragen werden (z.B. IPsec, TLS Record Layer, IEEE 802.1AE). Die Authentisierung und Schlüsselvereinbarung wird mittels eines ersten Authentisierungscredentials (auch als "private Key" bezeichenbar) des ersten Teilnehmers mittels eines ersten, dem ersten Authentisierungscredential zugeordneten kryptographischen Algorithmus (oder allgemein eines ersten Authentisierungsverfahrens) authentisiert. Optional (beidseitig, mutual authentication) kann zusätzlich die Authentisierung und Schlüsselvereinbarung mittels eines zweiten Authentisierungscredentials (private Key) des zweiten Teilnehmers mittels eines zweiten, dem zweiten Authentisierungscredential zugeordneten kryptographischen Algorithmus (oder allgemein eines zweiten Authentisierungsverfahrens) authentisiert werden.

Üblicherweise sind der erste kryptographische Algorithmus und der zweite kryptographische Algorithmus identisch, d.h. der erste Teilnehmer und der zweite Teilnehmer verwenden den gleichen kryptographischen Algorithmus, um sich jeweils zu authentisieren (z.B. RSA (klassisch), ECC (klassisch), KEM (klassisch oder PQ)).

Die Beglaubigungseinheit ist auch als "AKA Notarization Module", "AKA-Beglaubigungssystem" und/oder "AKA-Beglaubigungseinheit" bezeichenbar. Die integritätsgeschützten Daten sind auch als "AKA-Beglaubigung" bezeichenbar.

Die Daten, welche dem Authentisierungs- und Schlüsselvereinbarungsprotokoll-Ablauf zugehörig sind, sind auch als eine Datenstruktur bezeichenbar, im Sinne der Erfindung sind sie insbesondere als eine "noch unsignierte AKA-Beglaubigungsdatenstruktur" anzusehen. Insbesondere ist das Merkmal, dass die Daten dem Authentisierungs- und Schlüsselvereinbarungsprotokoll-Ablauf "zugehörig sind", so zu verstehen, dass die Daten aus einem ablaufenden Authentisierungsund Schlüsselvereinbarungsprotokoll oder der (vorrangegangenen, zugehörigen) Authentisierung- und Schlüsselvereinbarung resultieren. Allgemein weisen die Daten insbesondere eine zu beglaubigende Information zu dem Authentisierungs- und Schlüsselvereinbarungsprotokoll-Ablauf auf.

Die Bestätigungsrichtlinie ist auch als eine "AKA-Bestätigungs-Policy" oder eine "AKA Notarization Policy" bezeichenbar. Insbesondere umfasst sie auch mehrere Richtlinien.

Die Authentisierungseinheit ist ausgebildet, die Daten bezüglich deren Integrität zu schützen, wodurch integritätsgeschützte Daten gebildet werden. Die Authentisierungseinheit ist somit ausgebildet, eine weitere Authentisierung vorzunehmen. Durch die weitere Authentisierung wird ein Integritätsschutz für die zuvor genannte Authentisierung- und Schlüsselvereinbarung erstellt. Die zuvor genannte Authentisierungund Schlüsselvereinbarung wird im Weiteren auch als "vorrangegangene Authentisierung- und Schlüsselvereinbarung" benannt.

Erfindungsgemäß erfolgt somit zusätzlich eine weitere Authentisierung (auch als eine Bestätigung und/oder Beglaubigung bezeichenbar) der vorrangegangenen Authentisierung- und Schlüsselvereinbarung, wobei insbesondere ein drittes Credential (Authentisierungscredential (private Key)) verwendet wird. Das dritte Credential ist unterschiedlich zum ersten Authentisierungscredential und zu dem gegebenenfalls vorhandenen zweiten Authentisierungscredential. Weiterhin wird dabei ein dritter kryptographischer Algorithmus (oder allgemein ein drittes Authentisierungsverfahren) verwendet, der unterschiedlich zum ersten kryptographischen Algorithmus und zum zweiten kryptographischen Algorithmus ist. Diese erfindungsgemäße weitere Authentisierung wird in Form der integritätsgeschützten Daten bereitgestellt und kann auch als AKA-Beglaubigung bezeichnet werden, da sie die vorrangegangene Authentisierung und Schlüsselvereinbarung zusätzlich nochmals bestätigt, obwohl diese bereits mittels des ersten und ggf. des zweiten Authentisierungscredentials und mittels des ersten und ggf. des zweiten kryptographischen Algorithmus authentisiert ist.

Die Bereitstellungseinheit der Beglaubigungseinheit ist insbesondere integriert in oder identisch mit der Authentisierungseinheit.

Der bisherige Fokus von Forschungsarbeiten zu Post-Quantumsicheren Sicherheitsprotokollen liegt hauptsächlich auf einer hybriden Schlüsselvereinbarung, jedoch nicht bezüglich der Authentisierung. Dies ist dadurch begründet, dass die Vertraulichkeit einer Kommunikationssitzung auch nachträglich gebrochen werden kann, wenn aufgezeichnete Protokollnachrichten zu einem späteren Zeitpunkt entschlüsselt werden.

Allgemein werden jedoch PQ-Kryptoalgorithmen oder allgemein Next-Generation-Kryptoalgorithmen nicht das gleiche Vertrauen entgegengebracht, wie den über viele Jahre intensiv untersuchten herkömmlichen Kryptoalgorithmen (RSA, ECC). Daher erscheint es sinnvoll, auch bei einer Authentisierung mehrere Authentisierungsverfahren in Kombination zu verwenden. Dies kann insbesondere bei besonders kritischen Operationen wie einer Zertifikatsausstellung über einen sicheren Kommunikationskanal (EST, SCEP) oder bei einem Onboarding-Vorgang oder bei Online-Banking sinnvoll sein.

Es sind hybride Schlüsselvereinbarungsprotokolle bekannt. Diese adressieren jedoch eine hybride Schlüsselvereinbarung, aber nicht eine hybride, mehrfache Authentisierung bei einer Authentisierung und Schlüsselvereinbarung (AKA, authentication and key agreement).

Die Erfindung bietet den Vorteil, dass sie einen Schutz schafft, mit dem eine herkömmliche, nicht-PQ-sichere weitere Authentisierung praktikabel als Add-On-System in ein ansonsten unverändertes industrielles Automatisierungssystem ergänzt werden kann. Insbesondere wenn Altgeräte oder 3rd-Party-Komponenten nicht oder nicht zeitnah aktualisiert werden können, so dass sie selbst PQ-Kryptoalgorithmen unterstützen, kann dadurch nachträglich ein PQ-sicherer Zusatzschutz umgesetzt werden.

Anschaulich kann dies auch als ein PQ-sicheres Overlay verstanden werden, das als Zusatzschutz praktikabel in Brownfield-Umgebungen nachrüstbar ist. Die Erfindung bietet somit eine Lösung für einen praktikabel realisierbaren Zusatzschutz, um bestehende Implementierungen und Systeme für eine sichere, authentisierte Kommunikation nachträglich, um eine PQ-sichere Authentisierung ergänzen zu können. Es ist zwar nur für PQ-sichere Authentisierung und Integrität ausreichend, nicht für einen PQ-sicheren langzeittauglichen Vertraulichkeitsschutz. Derartige Schutzanforderungen bestehen beispielsweise bei der Übertragung von Steuerkommandos und Messdaten in industriellen Steuerungssystemen.

Weiterhin kann damit ein Hybrid-Zusatzschutz umgesetzt werden, der in Europa durch BSI und ANSSI gefordert wird. D.h. wenn Implementierungen nur die derzeitigen US-Anforderungen erfüllen, aber nicht die europäischen Anforderungen, so kann ein für Europa geforderter Hybridschutz als Add-on praktikabel ergänzt werden.

Weiterhin ist ein allgemeines, abstraktes Konstrukt beschrieben, bei dem eine vorangegangene Authentisierung und Schlüsselvereinbarung mit einem weiteren, kryptographisch unterschiedlichen Schutz geschützt wird, somit ein generisches Grundkonstrukt für eine hybride Authentisierung bei einer Authentisierung und Schlüsselvereinbarung.

In einer Weiterbildung der Erfindung weisen die Daten auf:
- mindestens eine Nachricht, welche innerhalb des Authentisierungs- und Schlüsselvereinbarungsprotokoll-Ablaufs ausgetauscht wurde, auch als ausgetauschte AKA-Nachrichten und/oder AKA-Protokollnachrichten bezeichenbar,
- einen Nachrichtenteil einer Nachricht, welche innerhalb des Authentisierungs- und Schlüsselvereinbarungsprotokoll-Ablaufs ausgetauscht wurde,
- eine Steuernachricht in einem industriellen Automatisierungssystem, welche innerhalb des Authentisierungs- und Schlüsselvereinbarungsprotokoll-Ablaufs ausgetauscht wurde,
- einen kryptographischen Hash-Wert einer Nachricht, welche innerhalb des Authentisierungs- und Schlüsselvereinbarungsprotokoll-Ablaufs ausgetauscht wurde.

Vorzugsweise weisen die Daten mehrere Nachrichten und/oder mehrere Nachrichtenteile auf, welche innerhalb des Authentisierungs- und Schlüsselvereinbarungsprotokoll-Ablaufs ausgetauscht wurden. Dabei können die mehreren Nachrichten und/oder mehreren Nachrichtenteile in gegensätzlicher Übertragungsrichtung zwischen dem ersten und dem zweiten Teilnehmer übertragene Nachrichten und/oder Nachrichtenteile sein. Weiterhin können die Daten mehrere Nachrichten und/oder mehrere Nachrichtenteile aufweisen, welche innerhalb einer Mehrzahl oder innerhalb einer Vielzahl von Authentisierungs- und Schlüsselvereinbarungsprotokoll-Abläufen zwischen dem ersten und dem zweiten Teilnehmer ausgetauscht wurden. Weiterhin können die Daten mehrere Nachrichten und/oder mehrere Nachrichtenteile aufweisen, welche innerhalb einer Mehrzahl oder innerhalb einer Vielzahl von Authentisierungs- und Schlüsselvereinbarungsprotokoll-Abläufen zwischen mehreren unterschiedlichen Teilnehmern ausgetauscht wurden.

In einer weiteren Weiterbildung der Erfindung weisen die Daten einen Parameter einer dem Authentisierungs- und Schlüsselvereinbarungsprotokoll-Ablauf zugehörigen Authentisierungund Schlüsselvereinbarung auf, insbesondere als ein in Nachrichten enthaltener AKA-Parameter zu betrachten,
wobei der Parameter ausgebildet ist als:
- ein Authentisierungscredential der dem Authentisierungsund Schlüsselvereinbarungsprotokoll-Ablauf zugehörigen Authentisierung- und Schlüsselvereinbarung,
- eine Information zu einem Kommunikationspartner des Authentisierungs- und Schlüsselvereinbarungsprotokoll-Ablaufs,
- eine Identifizierkennung (Identifier ID) eines Kommunikationspartners des Authentisierungs- und Schlüsselvereinbarungsprotokoll-Ablaufs, und/oder
- Nutzerdaten eines Kommunikationspartners des Authentisierungs- und Schlüsselvereinbarungsprotokoll-Ablaufs.

Der Parameter ist dem Authentisierungs- und Schlüsselvereinbarungsprotokoll-Ablauf zugehörig. Der Parameter ist auch als eine Zusatzinformation, die mittels einer Analyse des Authentisierungs- und Schlüsselvereinbarungsprotokoll-Ablaufs abgeleitet und/oder ermittelt wird, anzusehen. Insbesondere ist der Parameter als das genannten Authentisierungscredential, die genannte Information zu einem Kommunikationspartner, die genannte Identifizierkennung und/oder die genannten Nutzerdaten eines Kommunikationspartners ausgebildet. Der Parameter erleichtert eine spätere inhaltliche Auswertung und/oder Überprüfung der integritätsgeschützten Daten, auch als AKA-Beglaubigung bezeichenbar.

In einer weiteren Weiterbildung der Erfindung weist die Beglaubigungseinheit außerdem auf:
- eine Übertragungseinheit, ausgebildet die integritätsgeschützten Daten zu übertragen.

Die integritätsgeschützten Daten, auch als AKA-Beglaubigung bezeichenbar, ist dabei out-of-band oder in-band übertragbar, d.h. außerhalb oder innerhalb der kryptographisch geschützten, authentisierten Kommunikationssitzung im Rahmen des Authentisierungs- und Schlüsselvereinbarungsprotokoll-Ablaufs zwischen einem ersten und einem zweiten Teilnehmer. Bei einer In-Band-Übertragung kann die Übertragung innerhalb des Sicherheitsprotokolls (z.B. TLS, IPsec) selbst erfolgen, z.B. in einem Header, oder sie kann über ein übergeordnetes, darauf aufsetzendes Transportprotokoll oder Anwendungsprotokoll übertragen werden (z.B. HTTP, CoAP, MQTT, XMPP). Eine In-Band-Übertragung ist insbesondere sinnvoll, wenn die Beglaubigungseinheit von einem der Kommunikationspartner des Authentisierungs- und Schlüsselvereinbarungsprotokoll-Ablaufs aufgewiesen wird. Eine Out-of-Band-Übertragung erfolgt außerhalb der kryptographisch geschützten, authentisierten Kommunikationssitzung zwischen dem ersten und dem zweiten Teilnehmer, die durch den Authentisierungs- und Schlüsselvereinbarungsprotokoll-Ablauf geschützt ist. Sie kann jedoch beispielsweise über das gleiche Kommunikationsnetz oder über den gleichen Kommunikationsweg erfolgen.

Eine Out-of-Band-Übertragung hat den Vorteil, dass die AKA-Beglaubigung (z.B. eine PQ-sichere Zusatzauthentisierung) unabhängig von dem eigentlichen Sicherheitsprotokoll (IPsec/IKEv2, TLS, DTLS) erstellt werden kann, übertragen werden kann und überprüft werden kann. Dadurch kann praktikabel ein Zusatzschutz zu unveränderten, nicht PQ-sicheren Sicherheitsprotokollen ergänzt werden. Ein solcher Zusatzschutz allein kann speziell dann ausreichend sein, wenn vor allem die Integrität der Datenübertragung und die Authentizität der Kommunikationsteilnehmer geschützt werden soll, z.B. bei der Übertragung von Steuernachrichten in einem industriellen Automatisierungssystem. In solchen Fällen ist eine PQ-sichere Verschlüsselung (und damit Vertraulichkeit) oder überhaupt eine Verschlüsselung der kryptographisch geschützt übertragenen Daten häufig nicht erforderlich.

In einer weiteren Weiterbildung der Erfindung weist die Beglaubigungseinheit außerdem auf:
eine Verschlüsselungseinheit, ausgebildet die integritätsgeschützten Daten in verschlüsselter Form bereitzustellen.

Allgemein hat ein Bereitstellen der integritätsgeschützten Daten in verschlüsselter Form und/oder eine verschlüsselte Übertragung (in-band oder out-of-band) den Vorteil, dass die mit dem dritten Credential vorgenommene AKA-Beglaubigung verschlüsselt ist und damit angreiferseitig nicht lesbar ist, was Angriffe auf das dritte Credential (z.B. Seitenkanalangriffe) erschwert. Vorteil einer unverschlüsselten Übertragung ist dagegen, dass die AKA-Beglaubigung ggf. auch außerhalb der beiden Teilnehmer nachvollzogen werden kann und nicht zusätzlich geschützt werden muss, was einerseits etwas Rechenleistung und Latenz einsparen kann und andererseits einen ggf. teilweise erratbaren Datensatz vermeidet, der mit geheimen Credentials geschützt wird (Letzteres könnte Angriffe z.B. im Falle einer aufgedeckten Protokollschwäche erleichtern) .

In einer weiteren Weiterbildung der Erfindung ist die Authentisierungseinheit als eine Signiereinheit ausgebildet, wobei die Signiereinheit ausgebildet ist, die integritätsgeschützten Daten in signierter Form bereitzustellen.

Die integritätsgeschützten Daten sind in dieser Ausführungsform somit als signierte Daten ausgebildet.

Die integritätsgeschützten Daten in signierter Form weisen insbesondere eine PQ-sichere digitale Signatur auf oder sind durch ein PQ-sicheres KEM-Verfahren geschützt. D.h. die vorrangegangene Authentisierung- und Schlüsselvereinbarung wird insbesondere unter Nutzung eines PQ-sicheren digitalen Signaturverfahrens oder unter Nutzung eines PQ-sicheren KEM-Verfahrens beglaubigt. Für die vorrangegangene Authentisierung- und Schlüsselvereinbarung wird hingegen insbesondere ein klassisches Krypto-Verfahren verwendet, insbesondere RSA-Signatur, DSA, ECDSA. Postquantum-sichere kryptographische Verfahren, auch bezeichenbar als Next-Generationkryptographische Verfahren, sind insbesondere CRYSTALS-Dilithium, FALCON, SPHINCS+, LMS, XMSS sowie Gitter- oder Code-basierten Schlüsselkapselungsverfahren (key encapsulation mechanism, KEM), insbesondere Kyber, FrodoKEM oder Classic McEliece).

Die integritätsgeschützten Daten in signierter Form oder in KEM-geschützter Form können umgekehrt auch eine klassische, nicht PQ-sichere digitale Signatur, insbesondere RSA-Signatur, DSA, ECDSA, aufweisen oder durch ein klassisches, nicht PQ-sicheres KEM-Verfahren geschützt sein. D.h. die vorrangegangene Authentisierung- und Schlüsselvereinbarung wird insbesondere unter Nutzung eines klassischen digitalen Signaturverfahrens oder eines klassischen KEM-Verfahrens, z.B. unter Nutzung von RSA Encryption, beglaubigt. Für die vorrangegangene Authentisierung- und Schlüsselvereinbarung wird hingegen ein Post-Quantum-Verfahren verwendet.

In einer weiteren Weiterbildung der Erfindung ist die Signiereinheit ausgebildet, die Daten durch:
- ein Post-Quantum-sicheres Signaturverfahren oder ein Post-Quantum-sicheres Schlüsselkapselungsverfahren oder
- ein klassisches kryptographisches digitales Signaturverfahren, insbesondere ein RSA-Signaturverfahren, DSA oder ECDSA,
auf Integrität zu schützen, wodurch die integritätsgeschützten Daten in der signierten Form und/oder in integritätsgeschützter Form bereitgestellt werden.

In einer weiteren Weiterbildung der Erfindung beinhaltet die dem Authentisierungs- und Schlüsselvereinbarungsprotokoll-Ablauf zugehörige Authentisierung- und Schlüsselvereinbarung:
- einen klassischen kryptographischen Algorithmus, insbesondere eines Diffie-Hellman-Key-Exchange oder eines Elliptic Curve Diffie-Hellman-Key-Exchange,
- ein klassisches kryptographisches Authentisierungsverfahren, insbesondere RSA-Signatur, DSA, ECDSA,
- ein postquantum-sicheres kryptographisches Verfahren, auch bezeichenbar als ein Next-Generationkryptographisches Verfahren, insbesondere Gitter- oder Code-basierten Schlüsselkapselungsverfahren (key encapsulation mechanism, KEM), insbesondere Kyber, FrodoKEM oder Classic McEliece, oder
- ein Hybridverfahren (hybrid key agreement), bestehend aus einem klassischen kryptographischen Algorithmus und einem postquantum-sicheren kryptographischen Verfahren.

In einer weiteren Weiterbildung der Erfindung definiert die Bestätigungsrichtlinie eine Vorgabe, unter welcher die Erstellungseinheit ausgebildet ist, die Daten abzuleiten, wobei sich die Vorgabe bezieht auf:
- ein Sicherheitsprotokoll,
- eine Authentisierung- und Schlüsselvereinbarungsmethode und/oder
- ein Authentisierungscredential,
jeweils der dem Authentisierungs- und Schlüsselvereinbarungsprotokoll-Ablauf zugehörigen Authentisierung- und Schlüsselvereinbarung.

Die Bestätigungsrichtlinie (AKA Notarization Policy) legt somit fest für welche AKA-Vorgänge eine AKA-Beglaubigung gebildet werden soll.

In einer weiteren Weiterbildung der Erfindung definiert die Bestätigungsrichtlinie eine Bedingung, unter welcher die Erstellungseinheit ausgebildet ist, die Daten abzuleiten, wobei die Bedingung umfasst:
- einen Verbindungsaufbau,
- ein Update eines Sitzungsschlüssels innerhalb einer bereits aufgebauten Verbindung, (Update, welches einem vorherigen Verbindungsaufbau nachfolgt), und/oder
- eine Wiederaufnahme einer zuvor bestandenen (vorherigen) Verbindung,
jeweils im Rahmen des Authentisierungs- und Schlüsselvereinbarungsprotokoll-Ablaufs.

Die Bedingung ist somit auch als eine vorliegende Situation, Zustand zwischen Kommunikationspartnern oder eine Rahmenbedingung zu verstehen.

Eine feste oder vorgebbare AKA-Bestätigungs-Policy (AKA Notarization Policy) gibt somit an, ob nur ein beim Verbindungsaufbau erfolgter vollständiger AKA-Vorgang erfasst und bestätigt werden soll, oder auch nachfolgende Session-Key-Updates oder auch eine Wiederbenutzung eines bereits eingerichteten Security-Kontexts bei einer Session Resumption.

Die Erfindung umfasst außerdem ein Gerät, aufweisend eine erfindungsgemäße Beglaubigungseinheit.

Die Beglaubigungseinheit ist als separate Komponente ausführbar. Auch ist sie als eine Zusatzkomponente eines Geräts ausführbar, wie in dieser Ausführungsform. Das Gerät ist insbesondere auch ausgebildet, den Authentisierungs- und Schlüsselvereinbarungsprotokoll-Ablauf durchzuführen und als ein Kommunikationspartner für ein weiteres Gerät zu agieren.

Eine solche AKA-Beglaubigung kann somit durch den ersten Teilnehmer (Gerät) ausgestellt werden oder/und durch den zweiten Teilnehmer (weiteres Gerät), oder sie kann durch einen dritten Knoten (Proxy-Knoten, Notariatsknoten, separate Komponente) ausgestellt werden, der die bei der Authentisierung und Schlüsselvereinbarung zwischen dem ersten und dem zweiten Teilnehmer ausgestellten Nachrichten oder Nachrichtenteile ermittelt, z.B. durch ein Network Monitoring, und unabhängig vom ersten und vom zweiten Knoten bestätigt.

In einer Weiterbildung der Erfindung weist das Gerät außerdem auf:
- eine Vereinbarungseinheit, ausgebildet eine Authentisierung- und Schlüsselvereinbarung durchzuführen, wodurch ein Sitzungsschlüssel erstellt wird, und
- eine Kommunikationseinheit, ausgebildet den Sitzungsschlüssel in dem Authentisierungs- und Schlüsselvereinbarungsprotokoll-Ablauf zum Schutz einer Kommunikation (insbesondere mit einem weiteren Gerät) zu nutzen.

Die Kommunikation umfasst einen Austausch von Daten. Die Daten, welche innerhalb des Authentisierungs- und Schlüsselvereinbarungsprotokoll-Ablauf ausgetauscht werden, sind damit dem Authentisierungs- und Schlüsselvereinbarungsprotokoll-Ablauf zugehörig. Die Daten umfassen insbesondere Nachrichten oder Nachrichtenteile, ausgetauschte AKA-Nachrichten, auch als AKA-Protokollnachrichten bezeichenbar und/oder Steuernachrichten in einem industriellen Automatisierungssystem.

Außerdem sind die dem Authentisierungs- und Schlüsselvereinbarungsprotokoll-Ablauf zugehörige Daten insbesondere ausgebildet als in Nachrichten enthaltene AKA-Parameter, ein kryptographischer Hash-Wert von AKA-Nachrichten und/oder eine Information zu den beteiligten Kommunikationspartnern (insbesondere Geräte, Teilnehmer), insbesondere Nutzerdaten der Kommunikationspartner, eine Identifier ID eines Kommunikationspartners und/oder ein von einem Kommunikationspartner für die Authentisierung- und Schlüsselvereinbarung verwendetes Authentisierungscredential.

Die Erfindung umfasst außerdem ein Verfahren zum Bereitstellen integritätsgeschützter Daten,
mit den Schritten:
- ein Erfassen eines Authentisierungs- und Schlüsselvereinbarungsprotokoll-Ablaufs,
- ein Ableiten von Daten aus dem Authentisierungs- und Schlüsselvereinbarungsprotokoll-Ablauf unter Einbezug einer Bestätigungsrichtlinie, wobei die Daten dem Authentisierungs- und Schlüsselvereinbarungsprotokoll-Ablauf zugehörig sind,
- ein Schützen der Daten auf Integrität, wodurch integritätsgeschützte Daten gebildet werden, und
- ein Bereitstellen der integritätsgeschützten Daten.

Dem Authentisierungs- und Schlüsselvereinbarungsprotokoll-Ablauf geht eine Authentisierung und Schlüsselvereinbarung zum Einrichten eines symmetrischen Sitzungsschlüssels zwischen zwei Teilnehmern voran. Der symmetrische Sitzungsschlüssel wird zum kryptographischen Schutz von Nutzerdaten verwendet, die zwischen den Teilnehmern im Rahmen des Authentisierungs- und Schlüsselvereinbarungsprotokoll-Ablaufs übertragen werden (z.B. IPsec, TLS Record Layer, IEEE 802.1AE). Die Authentisierung und Schlüsselvereinbarung wird mittels eines ersten Authentisierungscredentials (private Key) des ersten Teilnehmers (Gerät) mittels eines ersten, dem ersten Authentisierungscredential zugeordneten kryptographischen Algorithmus authentisiert. Optional, im Falle einer beidseitigen Authentisierung (mutual authentication) wird zusätzlich die (erste) Authentisierung und Schlüsselvereinbarung mittels eines zweiten Authentisierungscredentials (private Key) des zweiten Teilnehmers (weiteres Gerät) mittels eines zweiten, dem zweiten Authentisierungscredential zugeordneten kryptographischen Algorithmus authentisiert.

Üblicherweise sind der erste kryptographische Algorithmus und der zweite kryptographische Algorithmus identisch, d.h. der erste Teilnehmer (Gerät) und der zweite Teilnehmer (weiteres Gerät) verwenden den gleichen kryptographischen Algorithmus, um sich jeweils zu authentisieren (insbesondere RSA (klassisch), ECC (klassisch), KEM (klassisch oder post-quantum)).

In einer Weiterbildung der Erfindung weist das erfindungsgemäße Verfahren die weiteren Schritte auf:
- ein Durchführen einer Authentisierung- und Schlüsselvereinbarung, wodurch ein Sitzungsschlüssel erstellt wird, und
- ein Kommunizieren innerhalb des Authentisierungs- und Schlüsselvereinbarungsprotokoll-Ablaufs unter Nutzung des Sitzungsschlüssels zum Schutz des Kommunizierens (insbesondere mit einem weiteren Gerät).

In einer weiteren Weiterbildung der Erfindung weist das erfindungsgemäße Verfahren den weiteren Schritt auf:
- ein Prüfen der integritätsgeschützten Daten.

Die integritätsgeschützten Daten (auch als AKA-Beglaubigung bezeichenbar) kann von dem ersten und/oder von dem zweiten Kommunikationsteilnehmer (Gerät und/oder weiteres Gerät) überprüft werden. Sie kann auch von einem speziellen Überwachungsknoten (separate Komponente/Einheit) überprüft werden, um zu erkennen, wenn eine nicht-PQ-sichere, herkömmliche Authentisierung manipuliert sein sollte. Kommt ein solcher Überwachungsknoten zum Einsatz, kann er in einer Variante der Erfindung ggf. auch vorteilhaft als "PQ-Proxy" eingesetzt werden: Ist der zweite Teilnehmer ein nicht-PQ-fähiges Legacy-Device im selben Netz wie der Überwachungsknoten, können für die Kommunikationssitzung nicht-PQ-sichere Algorithmen zum Einsatz kommen, während die PQ-sichere AKA-Beglaubigung des ersten Teilnehmers durch den Überwachungsknoten geprüft wird; dieser kann basierend auf der Überprüfung der PQ-sicheren AKA-Beglaubigung des ersten Teilnehmers dem zweiten Teilnehmer anschließend (mit einem nicht-PQ-sicheren Verfahren) bestätigen, dass sich der erste Teilnehmer erfolgreich PQ-sicher gegenüber dem Überwachungsknoten authentisiert hat und die Kommunikation fortgeführt werden darf. Diese Bestätigung kann ggf. über eine rein interne (d.h. ein von außen nicht erreichbare Schnittstelle) erfolgen.

Die AKA-Beglaubigung kann unmittelbar überprüft werden, um z.B. die betroffene, als manipuliert erkannte Kommunikationsverbindung zu beenden (z.B. durch einen Teilnehmerknoten) oder zu sperren oder einzuschränken (z.B. durch eine Firewall). Weiterhin ist es möglich, die Berechtigungen in einem Anwendungsprotokoll, das über die authentisierte und kryptographische Kommunikationsverbindung übertragen wird, abhängig davon anzupassen, ob zumindest eine gültige AKA-Attestierung, vorzugsweise eine Mehrzahl von übereinstimmenden AKA-Attestierungen, für diese Kommunikationssitzung vorliegt. So kann z.B. ein Onboarding oder eine Zertifikatsausstellung über EST/SCEP erst dann erfolgen, wenn die Zusatzüberprüfung der AKA-Beglaubigung erfolgt ist. Weiterhin können Berechtigungen zur Gerätekonfiguration über NETCONF/YANG abhängig von der Überprüfung einer AKA-Beglaubigung angepasst werden. Beispielsweise können besonders sicherheitskritische Operationen wie das Einspielen oder Aktualisieren von kryptographischen Schlüsseln über NETCONF/YANG zum Schutz einer TSN-Kommunikation nur dann freigegeben werden, wenn eine AKA-Beglaubigung für die zum Schutz der Übertragung von NETCONF/YANG bestehende Kommunikationssitzung (z.B. TLS, ssh) vorliegt und überprüft wurde.

Es ist jedoch auch möglich, die AKA-Beglaubigungen nachträglich zu einem späteren Zeitpunkt auszuwerten, z.B. nach Abbau der Kommunikationsverbindung zwischen erstem und zweitem Teilnehmer. Es kann dann z.B. bei ungültigen, unplausiblen oder inkonsistenten AKA-Beglaubigungen ein Alarm generiert werden, oder es kann ein Zertifikat widerrufen werden, das über eine betroffene authentisierte Kommunikationsverbindung angefordert oder bereitgestellt wurde, oder es können Konfigurationsänderungen einer Gerätekonfiguration oder in einer Datenbank rückabgewickelt werden (roll back), d.h. vorgenommene, protokollierte Änderungen werden zurückgenommen.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Gerät nach dem Stand der Technik,
- Fig. 2: eine Beglaubigungseinheit als eine Zusatzkomponente zum Gerät,
- Fig. 3: eine schematische Darstellung integritätsgeschützter Daten, welche dem Authentisierungs- und Schlüsselvereinbarungsprotokoll-Ablauf zugehörig sind (AKA-Beglaubigung), und
- Fig. 4: eine schematische Darstellung einer ausgewerteten AKA-Beglaubigung.

### DETAILLIERTE BESCHREIBUNG DER ERFINDUNG

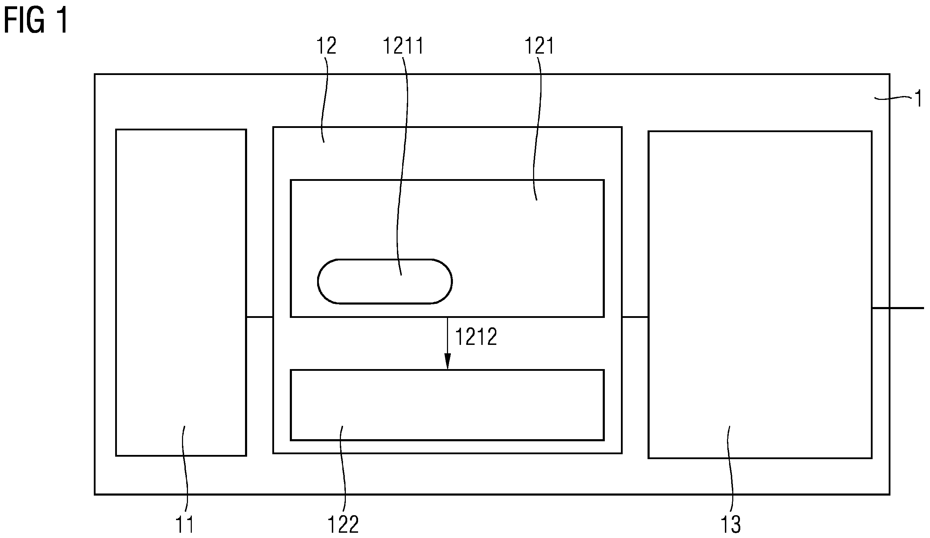

Fig. 1 zeigt ein Gerät 1 (Device 1) nach dem Stand der Technik, bei dem eine Applikation 11 (App 11) mittels eines Sicherheitsprotokolls 12 (Security Protocol 12) über ein Kommunikationsmodul 13 (Communication Protocol 13) geschützt kommunizieren kann. Das Sicherheitsprotokoll 12 führt eine Authentisierung 121 und Schlüsselvereinbarung 121 durch, bei der ein Sitzungsschlüssel 1212 zum Schutz 122 von Nutzerdaten der Applikation 11 für die Übertragung eingerichtet wird und wobei sich das Gerät 1 mittels eines Authentisierungscredentials 1211 (Auth-Cred 1211) gegenüber einem Kommunikationspartner authentisiert.

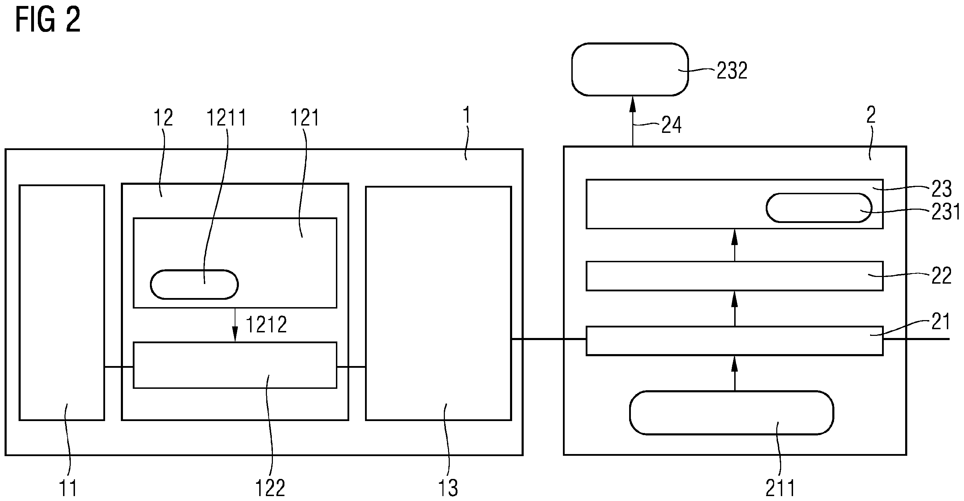

Fig. 2 zeigt ein Ausführungsbeispiel der Erfindung für die Umsetzung der Erfindung, bei der eine Beglaubigungseinheit 2 als eine Zusatzkomponente 2 (AKA Notarization Module 2, AKA-Beglaubigungssystem 2) zum Gerät 1 (inkl. der in Fig. 1 dargestellten Komponenten) eine Beglaubigung eines Authentisierungs- und Schlüsselvereinbarungsprotokoll-Ablaufs bildet 23 und bereitstellt 24.

Grundsätzlich ist es möglich, dass sich die Kommunikationspartner mit einem digitalen Zertifikat, z.B. nach X.509, authentisieren, oder dass sie sich mittels eines Verifiable Credentials bzw. mittels einer Verifiable Presentation authentisieren. Dazu kann ein Decentralized Identifier der Kommunikationspartner in einer dezentralen Transaktionsdaten (Distributed Ledger, Blockchain, z.B. Hyperledger Indy) hinterlegt sein.

Die betroffenen AKA-Abläufe werden von einer Erfassungseinheit 21 (AKA-Capture-Einheit 21) im Kommunikationsprotokollablauf erfasst und einer Erstellungseinheit 22 (der AKA-Notarization-Builder-Komponente 22) bereitgestellt, die die noch unsignierte AKA-Beglaubigungsdatenstruktur mit den zu beglaubigenden AKA-Informationen bildet (Daten, welche dem Authentisierungs- und Schlüsselvereinbarungsprotokoll-Ablauf zugehörig sind).

Die gebildete AKA-Beglaubigungsdatenstruktur wird dann mit einem Beglaubigungs-Schlüssel 231 (Notary-Cred 231) von der Authentisierungseinheit 23 digital signiert. Die digital signierte AKA-Beglaubigung 232 wird von der Bereitstellungseinheit 24 bereitgestellt. Statt einer digitalen Signatur kann auch ein KEM-Verfahren für den Schutz der Beglaubigung verwendet werden.

Die AKA-Beglaubigungsdatenstruktur kann z.B. von einem AKA-Beglaubigungssystem 2 (AKA Notarization Module 2) oder vom Kommunikationspartner überprüft werden. Abhängig davon kann dem Kommunikationspartner ein Signal oder eine Nachricht bereitgestellt werden, sodass er seine Funktionalität entsprechend anpassen kann. Statt einer herkömmlichen digitalen Signatur kann allgemein eine AKA-Beglaubigung 232 auch als ein Verifiable Credential oder als Verifiable Presentation, ausgestaltet sein. Dabei kann sich die AKA-Beglaubigungseinheit 2 (AKA Notarization Module 2) z.B. mittels eines digitalen Zertifikats, z.B. nach X.509, oder mittels eines Decentralized Identifiers authentisieren, der in einer dezentralen Transaktionsdatenbank (Distributed Ledger, Blockchain, z.B. Hyperledger Indy) hinterlegt ist.

Das AKA Notarization Module 2 kann auch in das Gerät 1 integriert (oder wie gezeigt separat) sein. Es kann bei einer Integration z.B. zwischen der Sicherheitsprotokoll-Einheit 12 und dem Kommunikationsmodul 13 angeordnet sein, oder es kann in die Sicherheitsprotokoll-Einheit 12 integriert sein. Dabei kann die AKA-Beglaubigung 232 auch "in-band" übertragen werden, d.h. an den Kommunikationspartner übertragen werden (z.B. als Teil der Nutzerdaten oder als Teil von Header-Daten des Sicherheitsprotokolls 12 oder eines für dessen Übertragung verwendeten Kommunikationsprotokolls).

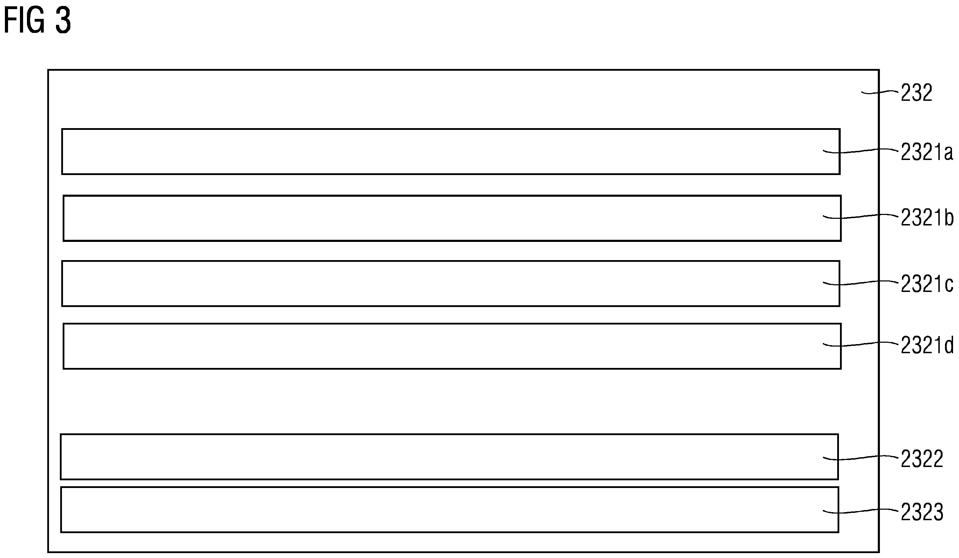

Fig. 3 zeigt ein Beispiel für eine AKA-Beglaubigung 232, die die beim AKA-Vorgang zwischen den Kommunikationspartnern ausgetauschten AKA-Nachrichten (AKA-Message, Nutzerdaten, die zwischen den Teilnehmern übertragen werden) umfasst. Im dargestellten Beispiel sind vier AKA-Nachrichten 2321a, 2321b, 2321c, 2321d dargestellt. Allgemein können auch z.B. zwei, drei, fünf, sechs oder zehn AKA-Nachrichten 2321a, 2321b, 2321c, 2321d bei einem AKA-Vorgang ausgetauscht werden. Weiterhin umfasst die AKA-Beglaubigung 232 einen Zeitstempel 2322 (time stamp 2322) und eine digitale Signatur 2323 (notary signature 2323).

Anstatt der eigentlichen AKA-Nachrichten 2321a, 2321b, 2321c, 2321d kann auch nur jeweils ein kryptographischer Hash-Wert jeder AKA-Nachricht 2321a, 2321b, 2321c, 2321d in der Beglaubigung 232 enthalten sein. Weiterhin ist es möglich, dass ein Hash-Wert enthalten ist, der über die ausgetauschten AKA-Nachrichten 2321a, 2321b, 2321c, 2321d eines AKA-Vorgangs gebildet wird.

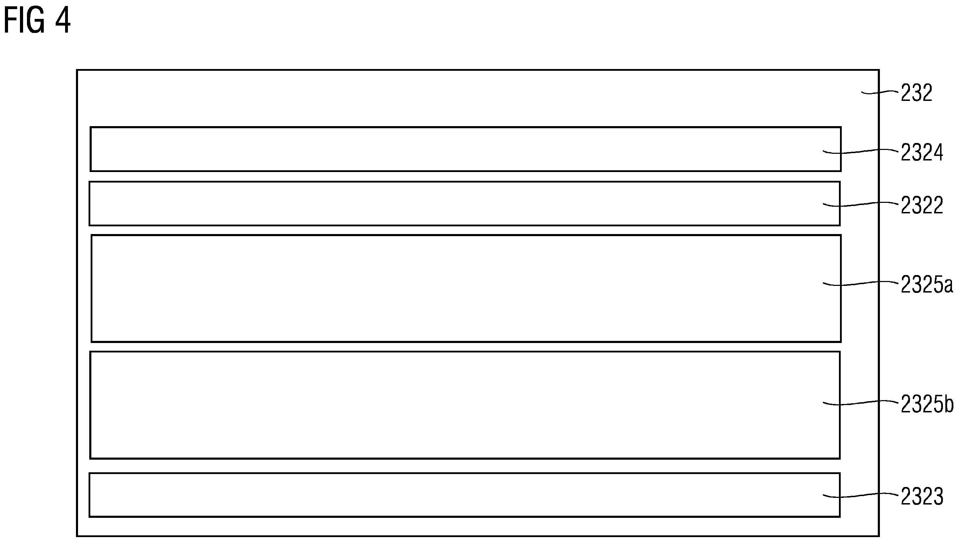

Fig. 4 zeigt ein Beispiel für eine AKA-Beglaubigung 232, die inhaltlich ausgewertet ist. Sie umfasst neben der Angabe der verwendeten AKA-Methode 2324 (z.B. RSA, DSA, ECDSA, DH, ECDH, KEM, z.B. Kyber, FrodoKEM oder Classic McEliece) einen Zeitstempel 2322 (bzw. Startzeitpunkt und Endzeitpunkt des AKA-Ablaufs), eine digitale Signatur 2323 (notary signature 2323) und Information 2325a, 2325b zu den beteiligten Kommunikationspartnern (jeweils deren Identifier ID und die von ihnen verwendeten Authentisierungscredentials Auth-Cred).

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Beglaubigungseinheit (2), aufweisend:
- eine Erfassungseinheit (21), ausgebildet einen Authentisierungs- und Schlüsselvereinbarungsprotokoll-Ablauf zu erfassen,
- eine Erstellungseinheit (22), ausgebildet Daten, welche dem Authentisierungs- und Schlüsselvereinbarungsprotokoll-Ablauf zugehörig sind, aus dem Authentisierungs- und Schlüsselvereinbarungsprotokoll-Ablauf unter Einbezug einer Bestätigungsrichtlinie (211) abzuleiten,
- eine Authentisierungseinheit (23), ausgebildet die Daten auf Integrität zu schützen, wodurch integritätsgeschützte Daten (232) gebildet werden, und
- eine Bereitstellungseinheit (24), ausgebildet die integritätsgeschützten Daten (232) bereitzustellen.

2. Beglaubigungseinheit (2) nach Anspruch 1,
wobei die Daten aufweisen:
- mindestens eine Nachricht (2321a, 2321b, 2321c, 2321d), welche innerhalb des Authentisierungs- und Schlüsselvereinbarungsprotokoll-Ablaufs ausgetauscht wurde,
- einen Nachrichtenteil einer Nachricht (2321a, 2321b, 2321c, 2321d), welche innerhalb des Authentisierungs- und Schlüsselvereinbarungsprotokoll-Ablaufs ausgetauscht wurde,
- eine Steuernachricht (2321a, 2321b, 2321c, 2321d) in einem industriellen Automatisierungssystem, welche innerhalb des Authentisierungs- und Schlüsselvereinbarungsprotokoll-Ablaufs ausgetauscht wurde,
- einen kryptographischen Hash-Wert einer Nachricht (2321a, 2321b, 2321c, 2321d), welche innerhalb des Authentisierungs- und Schlüsselvereinbarungsprotokoll-Ablaufs ausgetauscht wurde.

3. Beglaubigungseinheit (2) nach einem der vorhergehenden Ansprüche,
wobei die Daten einen Parameter (2325a, 2325b) einer dem Authentisierungs- und Schlüsselvereinbarungsprotokoll-Ablauf zugehörigen Authentisierung- und Schlüsselvereinbarung (121) aufweisen,
wobei der Parameter (2325a, 2325b) ausgebildet ist als:
- ein Authentisierungscredential (1211) der dem Authentisierungs- und Schlüsselvereinbarungsprotokoll-Ablauf zugehörigen Authentisierung- und Schlüsselvereinbarung (121),
- eine Information zu einem Kommunikationspartner des Authentisierungs- und Schlüsselvereinbarungsprotokoll-Ablaufs,
- eine Identifizierkennung eines Kommunikationspartners des Authentisierungs- und Schlüsselvereinbarungsprotokoll-Ablaufs, und/oder
- Nutzerdaten eines Kommunikationspartners des Authentisierungs- und Schlüsselvereinbarungsprotokoll-Ablaufs.

4. Beglaubigungseinheit (2) nach einem der vorhergehenden Ansprüche,
außerdem aufweisend:
- eine Übertragungseinheit (24), ausgebildet die integritätsgeschützten Daten (232) zu übertragen.

5. Beglaubigungseinheit (2) nach einem der vorhergehenden Ansprüche,
außerdem aufweisend:
- eine Verschlüsselungseinheit, ausgebildet die integritätsgeschützten Daten (232) in verschlüsselter Form bereitzustellen.

6. Beglaubigungseinheit (2) nach einem der vorhergehenden Ansprüche,
- wobei die Authentisierungseinheit (23) als eine Signiereinheit (23) ausgebildet ist, wobei die Signiereinheit (23) ausgebildet ist, die integritätsgeschützten Daten (232) in signierter Form bereitzustellen.

7. Beglaubigungseinheit (2) nach Anspruch 6,
wobei die Signiereinheit (23) ausgebildet ist, die Daten durch:
- ein Post-Quantum-sicheres Signaturverfahren oder ein Post-Quantum-sicheres Schlüsselkapselungsverfahren oder
- ein klassisches kryptographisches digitales Signaturverfahren
auf Integrität zu schützen, wodurch die integritätsgeschützten Daten (232) in der signierten Form und/oder in integritätsgeschützter Form bereitgestellt werden.

8. Beglaubigungseinheit (2) nach einem der vorhergehenden Ansprüche,
wobei die dem Authentisierungs- und Schlüsselvereinbarungsprotokoll-Ablauf zugehörige Authentisierung- und Schlüsselvereinbarung (121):
- einen klassischen kryptographischen Algorithmus, insbesondere eines Diffie-Hellman-Key-Exchange oder eines Elliptic Curve Diffie-Hellman-Key-Exchange,
- ein klassisches kryptographisches Authentisierungsverfahren, insbesondere RSA-Signatur, DSA, ECDSA,
- ein postquantum-sicheres kryptographisches Verfahren, insbesondere Gitter- oder Code-basierten Schlüsselkapselungsverfahren, insbesondere Kyber, FrodoKEM oder Classic McEliece, oder
- ein Hybridverfahren, bestehend aus einem klassischen kryptographischen Algorithmus und einem postquantum-sicheren kryptographischen Verfahren
beinhaltet.

9. Beglaubigungseinheit (2) nach einem der vorhergehenden Ansprüche,
wobei die Bestätigungsrichtlinie (211) eine Vorgabe definiert, unter welcher die Erstellungseinheit ausgebildet ist, die Daten abzuleiten,
wobei sich die Vorgabe bezieht auf:
- ein Sicherheitsprotokoll (12),
- eine Authentisierung- und Schlüsselvereinbarungsmethode und/oder
- ein Authentisierungscredential (1211),
jeweils der dem Authentisierungs- und Schlüsselvereinbarungsprotokoll-Ablauf zugehörigen Authentisierung- und Schlüsselvereinbarung (121).

10. Beglaubigungseinheit (2) nach einem der vorhergehenden Ansprüche,
wobei die Bestätigungsrichtlinie (211) eine Bedingung definiert, unter welcher die Erstellungseinheit (22) ausgebildet ist, die Daten abzuleiten,
wobei die Bedingung umfasst:
- einen Verbindungsaufbau,
- ein Update eines Sitzungsschlüssels (1212) innerhalb einer bereits aufgebauten Verbindung, und/oder
- eine Wiederaufnahme einer zuvor bestandenen Verbindung,
jeweils im Rahmen des Authentisierungs- und Schlüsselvereinbarungsprotokoll-Ablaufs.

11. Gerät (1), aufweisend eine Beglaubigungseinheit (2) nach einem der vorherigen Ansprüche.

12. Gerät (1) nach Anspruch 11,
außerdem aufweisend:
- eine Vereinbarungseinheit, ausgebildet eine Authentisierung- und Schlüsselvereinbarung 121 durchzuführen, wodurch ein Sitzungsschlüssel (1212) erstellt wird, und
- eine Kommunikationseinheit (13), ausgebildet den Sitzungsschlüssel (1212) in dem Authentisierungs- und Schlüsselvereinbarungsprotokoll-Ablauf zum Schutz einer Kommunikation zu nutzen.

13. Verfahren zum Bereitstellen integritätsgeschützter Daten (232),
mit den Schritten:
- ein Erfassen eines Authentisierungs- und Schlüsselvereinbarungsprotokoll-Ablaufs,
- ein Ableiten von Daten aus dem Authentisierungs- und Schlüsselvereinbarungsprotokoll-Ablauf unter Einbezug einer Bestätigungsrichtlinie (211), wobei die Daten dem Authentisierungs- und Schlüsselvereinbarungsprotokoll-Ablauf zugehörig sind,
- ein Schützen der Daten auf Integrität, wodurch integritätsgeschützte Daten (232) gebildet werden, und
- ein Bereitstellen der integritätsgeschützten Daten (232) .

14. Verfahren nach Anspruch 13,
mit den weiteren Schritten:
- ein Durchführen einer Authentisierung- und Schlüsselvereinbarung, wodurch ein Sitzungsschlüssel (1212) erstellt wird, und
- ein Kommunizieren innerhalb des Authentisierungsund Schlüsselvereinbarungsprotokoll-Ablaufs unter Nutzung des Sitzungsschlüssels (1212) zum Schutz des Kommunizierens.

15. Verfahren nach Anspruch 13 oder 14,
mit dem weiteren Schritt:
- ein Prüfen der integritätsgeschützten Daten (232).
